# EUROPEAN PATENT APPLICATION

(11) **EP 4 209 933 A1**
(43) Date of publication of application: **12.07.2023**
(21) Application number: 21863271.9
(22) Date of filing: 27.05.2021
(51) Int. Cl.: G06F 17/00

(54) **DATA PROCESSING METHOD AND APPARATUS, AND ELECTRONIC DEVICE AND STORAGE MEDIUM**

(30) Priority: 04.09.2020 CN 202010924220
(71) Applicant: Beijing Wodong Tianjun Information Technology Co., Ltd., 100176 Beijing (CN); Beijing Jingdong Century Trading Co., Ltd., Beijing 100176 (CN)
(72) Inventor: XIE, Gaochun, Beijing 100176 (CN)
(74) Representative: Vossius & Partner Patentanwälte Rechtsanwälte mbB
(86) International application number: PCT/CN2021/096363
(87) International publication number: WO 2022/048201

(57) **Abstract**

Provided are a data processing method and apparatus, and an electronic device and a storage medium, which relate to the technical field of computers. The data processing method comprises: acquiring data to be subjected to statistics collection, and performing fragmentation processing on said data to generate task fragment data (S210); distributing the task fragment data to an event listener by means of a preset event broadcaster (S220); and on the basis of the event listener, querying and assembling data according to the task fragment data, so as to generate multi-level category data corresponding to the data to be subjected to statistics collection (S230). Performing flattening and disassembling processing on multi-level category data of a tree structure effectively improves the data processing efficiency of an information system.

## Description

### CROSS REFERENCE OF RELATED APPLICATIONS

The present disclosure claims priority to Chinese Patent Application No. 202010924220.9, filed on September 4, 2020, entitled "DATA PROCESSING METHOD AND APPARATUS, AND ELECTRONIC DEVICE AND STORAGE MEDIUM", the entire contents of which are incorporated herein by reference in its entirety.

### TECHNICAL FIELD

The present disclosure relates to the technical field of computer technology, and particularly, to a data processing method, a data processing apparatus, an electronic device, and a computer readable storage medium.

### BACKGROUND

With the development of science and technology, unmanaged intelligent offline item trading systems (e.g. intelligent physical shops, intelligent vending machines, etc.) are becoming more and more popular. Therefore, the statistics of the complex data of intelligent replenishment on the purchasing side of the supply chain to which the intelligent offline item trading system belongs is also becoming more and more important.

At present, in the relevant solutions, when conducting statistics on the complex data of intelligent replenishment on the purchasing side corresponding to the intelligent offline item trading systems, the data structure is relatively complex and the data is large, so the information system spends long time on data statistics, the data processing cycle is long, and the efficiency of data processing of the information system is low.

It should be noted that the information disclosed in the above Background section is only for enhancement of understanding of the background of the present disclosure, and therefore may contain information that does not form the prior art that is already known to a person of ordinary skill in the art.

### SUMMARY

It is an object of embodiments of the present disclosure to provide a data processing method, a data processing apparatus, an electronic device, and a computer readable storage medium, to solve the problem of inefficient data processing of information systems corresponding to intelligent offline item trading systems in related solutions to at least some extent.

According to a first aspect of the present disclosure, there is provided a data processing method, including: acquiring data to be subjected to statistics collection, and performing fragmentation processing on the data to be subjected to statistics collection to generate task fragment data; distributing the task fragment data to an event listener via a preset event broadcaster; and querying and assembling data according to the task fragment data based on the event listener, to generate multi-level category data corresponding to the data to be subjected to statistics collection.

According to a second aspect of the present disclosure, there is provided a data processing apparatus, including: a task fragmentation module, configured to acquire data to be subjected to statistics collection, and perform fragmentation processing on the data to be subjected to statistics collection to generate task fragment data; a data distribution module, configured to distribute the task fragment data to an event listener via a preset event broadcaster; and a data assembly module, configured to query and assemble data according to the task fragment data based on the event listener, to generate multi-level category data corresponding to the data to be subjected to statistics collection.

According to a third aspect of the present disclosure, there is provided an electronic device, including: a processor; and a memory, having computer readable instructions stored thereon, wherein the computer readable instructions enables the electronic device to perform following steps when executed by the processor: acquiring data to be subjected to statistics collection, and performing fragmentation processing on the data to be subjected to statistics collection to generate task fragment data; distributing the task fragment data to an event listener via a preset event broadcaster; and querying and assembling data according to the task fragment data based on the event listener, to generate multi-level category data corresponding to the data to be subjected to statistics collection.

According to a fourth aspect of embodiments of the present disclosure, there is provided a computer readable storage medium, having computer programs stored thereon, wherein the computer program enables the processor to perform following steps when executed by the processor: acquiring data to be subjected to statistics collection, and performing fragmentation processing on the data to be subjected to statistics collection to generate task fragment data; distributing the task fragment data to an event listener via a preset event broadcaster; and querying and assembling data according to the task fragment data based on the event listener, to generate multi-level category data corresponding to the data to be subjected to statistics collection.

It should be noted that the above general description and the following detailed description are merely exemplary and exemplary and should not be construed as limiting of the present disclosure.

### BRIEF DESCRIPTION OF THE DRAWINGS

The accompanying drawings, which are incorporated in and constitute a part of this specification, illustrate embodiments consistent with the disclosure and serve to explain the principles of the disclosure together with the description. The drawings in the following description are only some embodiments of the present disclosure, and for those of ordinary skill in the art, other drawings can also be obtained from these drawings without creative effort. In the drawings:
FIG. 1 schematically illustrates a schematic diagram of the structure of tree-structured data according to some embodiments of the present disclosure.
FIG. 2 schematically illustrates a flow diagram of a data processing method according to some embodiments of the present disclosure.
FIG. 3 schematically illustrates a schematic diagram of the structure of a data distribution mechanism according to some embodiments of the present disclosure.
FIG. 4 schematically illustrates a flow diagram of data processing for data to be subjected to statistics collection according to some embodiments of the present disclosure
FIG. 5 schematically illustrates a schematic diagram of a data processing apparatus according to some embodiments of the present disclosure.
FIG. 6 schematically illustrates a schematic diagram of the structure of a computer system for an electronic device according to some embodiments of the present disclosure
FIG. 7 schematically illustrates a schematic diagram of a computer readable storage medium according to some embodiments of the present disclosure.

In the accompanying drawings, identical or corresponding reference numerals indicate identical or corresponding portions.

### DETAILED DESCRIPTION

Example embodiments will now be described more fully with reference to the accompanying drawings. Example embodiments, however, can be embodied in various forms and should not be construed as limited to the embodiments set forth herein; rather, these embodiments are provided so that this disclosure will be thorough and complete, and will fully convey the concept of example embodiments to those skilled in the art.

Furthermore, the described features, structures, or characteristics may be combined in any suitable manner in one or more embodiments. In the following description, numerous specific details are provided in order to give thorough understanding of the embodiments of the present disclosure. However, those skilled in the art will appreciate that the technical solutions of the present disclosure may be practiced without one or more of the specific details, or other methods, components, devices, steps, etc. may be employed. In other instances, well-known methods, devices, implementations, or operations are not shown or described in detail to avoid obscuring aspects of the present disclosure.

In addition, the accompanying drawings are illustrative only and are not necessarily drawn to scale. The block diagrams shown in the figures are merely functional entities and do not necessarily correspond to physically separate entities. That is, these functional entities may be implemented in software, or in one or more hardware modules or integrated circuits, or in different networks and/or processor devices and/or microcontroller devices.

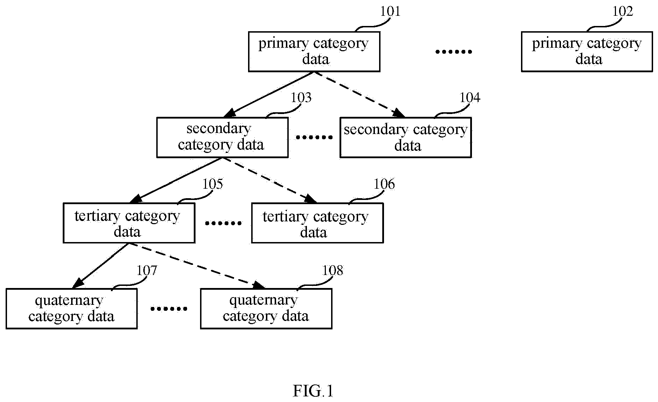

The applicant's research found that the automatic order data is tree-structured data. Referring to FIG. 1, the tree-structured data includes primary category data 101 to primary category data 102. The primary category data 101 includes secondary category data 103 to secondary category data 104. The primary category data 102 also includes the same secondary category data, which is not shown in the figure. The secondary category data 103 includes tertiary category data 105 to tertiary category data 106. The secondary category data 104 also includes the same tertiary category data, which is not shown in the figure. The tertiary category data 105 includes quaternary category data 107 to quaternary category data 108. The tertiary category data 106 also includes the same quaternary category data, which is not shown in the figure. It is readily understood that the quaternary category data in FIG. 1 may also include quinary category data. The data may be subdivided into a number of more sub-category data depending on actual situations, which is not specifically shown in FIG. 1. It is clear from FIG. 1 that the automatic order data of the tree structure is not only complex, but also has a large data volume.

In a related solution, when a user clicks a page, the backend initiates a Mysql database query operation, to interpolate various layers and then conducts a final aggregation of data statistics based on the data from each layer. When the user triggers a query operation, the system queries the database for statistics. If a query for the quaternary category data is triggered, it is relatively simple, and the tertiary category data 105 corresponding to all data from the quaternary category data 107 to the quaternary category data 108 are queried. However, if the user queries the primary category data 101, the corresponding secondary category data need to be aggregated and calculated, and then each secondary category data needs to aggregate its corresponding tertiary category data, and each tertiary category data needs to aggregate all the corresponding quaternary category data. The statistics will be calculated level by level, which will result in a very large amount of data to be counted, and in turn lead to very time-consuming statistical calculation.

In another related solution, through the timed task, timed statistics, for example, for the current tree-structured data, each node at each layer in a single threading all need to perform statistics. Assuming there are four layers, the timed task needs to calculate layer by layer, performs the statistics, and then saves to the Mysql database. For the timed pre-computation of data, it also faces the same problem, i.e., long calculation time and single-threaded calculation. When the data is large, the calculation cycle and server pressure is large.

There is also a related solution in which it would be very convenient to process such data statistically through the big data approach. However, if the data is processed in a big data approach, for companies or users who do not have a big data computing platform, this will spend a lot of costs, including the cost of building the platform (e.g. spark, hbase, hadoop, kafka and other clusters), spent man-hours, invested machine resources, etc. The cost is high.

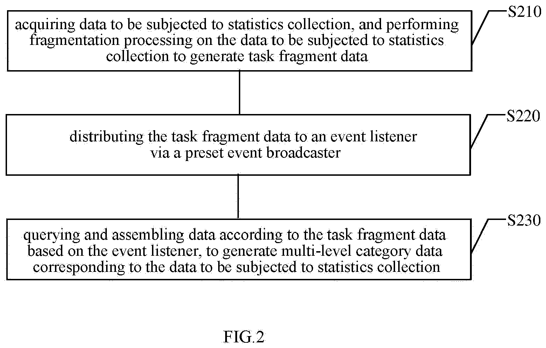

Based on one or more of the above problems, in this example embodiment, a data processing method is first provided, which can be applied to terminal devices, such as mobile phones, computers and other electronic devices, and can also be applied to servers, which is not specially limited in this example embodiment. For example, in the following, the server performs the method. FIG. 2 schematically illustrates a diagram of processes of a data processing method according to some embodiments of the present disclosure. Referring to FIG. 2, the data processing method may include the following steps:
step S210, acquiring data to be subj ected to statistics collection, and performing fragmentation processing on the data to be subjected to statistics collection to generate task fragment data;
step S220, distributing the task fragment data to an event listener via a preset event broadcaster;
step S230, querying and assembling data according to the task fragment data based on the event listener, to generate multi-level category data corresponding to the data to be subjected to statistics collection.

According to the data processing method in this example embodiment, on one hand, before querying and assembling the data to be subjected to statistics collection, fragmentation processing is firstly performed on the data to be subjected to statistics collection, which reduces the complexity of the data and improves the data processing efficiency of the information system. On the other hand, the task fragment data is distributed to an event listener via an event broadcaster, and the data is queried and assembled via the event listener to achieve asynchronous processing of the data to be subjected to statistics collection, which effectively reduces the data calculation cycle and further improves the data processing efficiency of the information system.

In the following, the data processing method in this example embodiment will be further described.

In step S210, data to be subjected to statistics collection is acquired, and fragmentation processing is performed on the data to be subjected to statistics collection to generate task fragment data.

In an example embodiment of the present disclosure, the data to be subjected to statistics collection may refer to data with a complex structure or complex path that needs to be subjected to statistics collection. For example, the data to be subjected to statistics collection may be tree-structured data corresponding to the type of goods of the automatic order data, or may be data with a mesh structure, or may be other data to be subjected to statistics collection with a complex structure or complex path, which is not specifically limited in this example embodiment.

The fragment processing may refer to the process of flattening and disassembling the data to be subjected to statistics collection according to specific data. For example, the fragment processing may be the process of disassembling the tree structure of the data to be subjected to statistics collection corresponding to all intelligent offline item trading systems according to different item trading system numbers, or the process of disassembling the mesh structure of the data to be subjected to statistics collection according to path numbers, which is not particularly limited in the example embodiment. The task fragment data may be metadata generated after performing fragment processing on the data to be subjected to statistics collection.

In particular, the identification data corresponding to the data to be subjected to statistics collection can be acquired, and then fragmentation processing is performed on the data to be subjected to statistics collection according to the identification data, to generate the task fragment data corresponding to the data to be subjected to statistics collection.

The identification data may refer to the basis for performing fragmentation processing on the data to be subjected to statistics collection. For example, when the data to be subjected to statistics collection is the tree-structured data corresponding to the type of goods of the automatic order data, the identification data may be the item trading system number StoreID corresponding to each automatic order data, or may be the path number of the mesh structure. The identification data may also be other data that can be used as a basis for performing fragmentation processing on the data to be subjected to statistics collection, which is not particularly limited in this example embodiment.

For example, when the data to be subjected to statistics collection is the tree-structured data corresponding to the type of goods of the automatic order data, the identification data may be the item trading system number. The primary category data, secondary category data, tertiary category data and quaternary category data corresponding to the first item trading system number may be served as the first task fragment data. The primary category data, secondary category data, tertiary category data and quaternary category data corresponding to the second item trading system number may be served as the second task fragment data, and so on, thereby performing fragmentation processing on the data to be subjected to statistics collection with a complex structure and a large amount of data to generate a plurality of task fragmentation data.

In step S220, the task fragment data is distributed to an event listener via a preset event broadcaster.

In an example embodiment of the present disclosure, the preset event broadcaster may refer to a program in the Spring event listening mechanism for distributing received events to a data consuming node of the event listener. The event listener may refer to a program of the event consuming node that receives events distributed by the event broadcaster and processes the events.

In an example embodiment of the present disclosure, before distributing the task fragment data to an event listener via a preset event broadcaster, it may be determined, based on the preset event broadcaster, target identification data corresponding to the task fragment data according to the task fragment data, and then primary category data corresponding to the target identification data is determined by performing data query based on the target identification data.

In the embodiment, the target identification data may be the identification data corresponding to the current task fragment data. For example, the first item trading system number corresponds to the first task fragment data. The second item trading system number corresponds to the second task fragment data. When the current task fragment data is the second task fragment data, the target identification data may be the second item trading system number. This is only an illustrative example, and the example embodiment does not make any special limitation on this.

When the preset event broadcaster acquires the task fragment data subjected to fragmentation processing, the current task fragment data contains the target identification data and the scattered data corresponding to the target identification data. Before the event distribution, primary category data corresponding to the target identification data is determined by performing data query based on the target identification data, so as to facilitate the consumption and collation of data for subsequent data query and assembly, and to improve the efficiency of data statistics.

Further, it may be constructed, based on the preset event broadcaster, a data capture event according to the task fragment data and the primary category data and the target identification data corresponding to the task fragment data, and the data capture event is distributed to the event listener to perform asynchronous processing on the data capture event.

The data capture event may be an event command constructed according to the primary category data and the target identification data corresponding to the task fragment data. The Spring event listener mechanism mainly consists of three components: an event, an event broadcaster and an event listener registry. By constructing data capture events according to the primary category data and the target identification data corresponding to the task fragment data, it facilitates subsequent consumption of the task fragment data by the preset event broadcaster and event listener.

In step S230, based on the event listener, data is queried and assembled according to the task fragment data, to generate multi-level category data corresponding to the data to be subjected to statistics collection.

In an example embodiment of the present disclosure, the data capture events constituted by the plurality of task fragment data are distributed and broadcasted to a plurality of event listeners via a preset event broadcaster. The plurality of event listeners execute the data capture events asynchronously upon receiving the respective corresponding data capture events, to enable asynchronous processing of the data capture events constituted by the plurality of task fragment data. The event listener queries the data according to the primary category data and the target identification data corresponding to the task fragment data, and assembles the queried data along the primary category data to obtain the multi-level category data corresponding to the current task fragment data. Finally, the multi-level category data corresponding to the different task fragment data is assembled to obtain the multi-level category data of the tree structure corresponding to the data to be subjected to statistics collection.

Specifically, sub-category data may be queried and captured in a target database according to the primary category data and the target identification data corresponding to the task fragment data in the data capture event, based on the event listener; the target identification data, the primary category data and the sub-category data are assembled to generate the multi-level category data corresponding to the data to be subjected to statistics collection.

For example, the sub-category data may refer to a plurality of sub-category data corresponding to the primary category data under the current target identification data queried and captured by the event listener. For example, the sub-category data may be the secondary category data, the tertiary category data and the quaternary category data corresponding to the primary category data of the first item trading system number queried and captured by the event listener under the first item trading system number. This is only an illustrative example and the example embodiment is not particularly limited in this regard. The target database may be the database where the data to be subjected to statistics collection is stored.

Further, order data and product data of the lowest-level category data corresponding to the primary category data under the target identification data are queried and acquired in the target database, according to the primary category data and the target identification data corresponding to the task fragment data in the data capture event; and then sub-category data may be generated by performing level-by-level statistical processing through the lowest-level category data, wherein the sub-category data includes a plurality of levels of category data, and identification processing is performed on different levels of category data.

For example, the lowest-level category data may be the category data at the lowest level among the sub-category data corresponding to the primary category data under the target identification data. For example, the lowest-level category data may be the leaf node of the tree-structured data or the edge node of the mesh structure data, which is not particularly limited in this example embodiment.

For example, if the hierarchy of the tree-structured data includes four levels, the lowest-level category data may be the quaternary category data. The order data and product data corresponding to the quaternary category data under the primary category data are queried and captured via the event listener, and then the tertiary category data is obtained based on the statistical assembly of the order data and product data corresponding to the quaternary category data, and then the secondary category data is obtained based on the statistics of the tertiary category data. Finally, the sub-category data corresponding to the primary category data is obtained according to the secondary category data, the tertiary category data and the quaternary category data.

At the same time, when the secondary category data, tertiary category data and quaternary category data are obtained, identification processing may be performed on different metadata in the secondary category data, tertiary category data and quaternary category data. Through the identification of different metadata, it improves the efficiency of data storage and enhances the efficiency of data query when the data is subsequently queried. For example, when the user queries the primary category data, instead of getting it from the quaternary category data step by step recursively, it can be directly obtained according to the identification of the data directly, which effectively improves the query efficiency of the data.

Optionally, after querying and assembling the data based on the task fragment data to generate the multi-level category data corresponding to the data to be subjected to statistics collection, the multi-level category data subjected to flattening processing is stored in a target database. When the multi-level category data corresponding to the data to be subjected to statistics collection is generated, the metadata in the multi-level category data contains different level identifications. The multi-level category data and the different level identifications are stored in the target database, which can effectively improve the efficiency of querying the data when the data is used.

The example embodiment mainly fragments the primary category data, performs the fragmentation calculation according to each path, and then executes on time, saves it in the database after the calculation is completed and then it is used by the user for query.

The entire calculation can be completed by the following steps.

Set up a timed task to be executed once a day, and the execution data date is the previous day. When the timed task starts, the data corresponding to all item trading systems is firstly obtained, and then the data of each item trading system is distributed out as a piece of fragmentation data, for the consuming node to calculate start consumption.

When the calculation node consumes the fragmentation data, it starts to perform processing. The node first obtains the task fragment data, obtains the item trading system data, and obtains the primary category data corresponding to the item trading system through data query. The data is obtained and then distributed, at this time, through the Spring event listening mechanism, events are created and distributed, and all events are processed asynchronously at this time.

After the task is distributed, the data contains a primary category data and sub-category data and data of the item trading system. After the event listener monitors the event, the current event processor firstly captures, queries and assembles data, calculates the quaternary category data including automatic replenishment order number, and then captures the manual order data, and saves the data to the database. At the same time, the quaternary category data is aggregated to the tertiary category data. The data is pushed upwards layer by layer, eventually generating the node data at each level, wherein the data needs to be marked at which level. The calculation result is sent out via JMQ (message middleware) each time the calculation is completed.

Finally, after the JMQ message is monitored, the system consumes the message and acquires the calculation data and stores in a Mysql data record.

Through the Spring-based event listening mechanism, capturing data, asynchronous processing, flattening the tree-structured data corresponding to the data to be subjected to statistics collection, the data is flattened in advance and stored in the Mysql database, which can effectively improve the data processing efficiency of the information system and enhance the efficiency of querying data by the user.

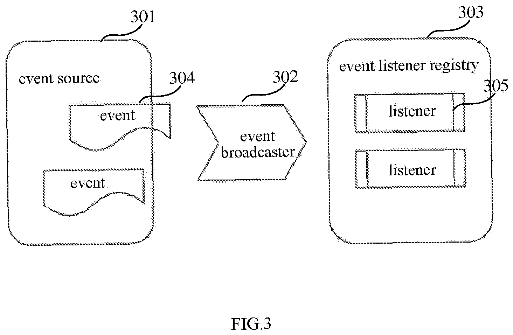

FIG. 3 schematically illustrates a schematic diagram of the structure of a data distribution mechanism according to some embodiments of the present disclosure.

Referring to FIG. 3, the Spring event listening mechanism mainly consists of three components: an event source 301, an event broadcaster 302 and an event listener registry 303. The event source 301 includes a plurality of events 304. A plurality of event listeners 305 are managed in the event listener registry 303. After performing fragmentation processing on the data to be subjected to statistics collection to obtain a plurality of task fragment data, the data capture event is constructed according to the primary category data and the target identification data corresponding to the task fragment data, and the data capture event is then stored in the event source 301. The plurality of data capture events in the event source 301 are distributed and broadcasted to the plurality of event listeners 305 in the event listener registry 303 via the event broadcaster 302. Each event listener 305 is responsible for one data capture event. At this time, the event listener 305 asynchronously processes and consumes the data capture events to obtain the multi-level category data of the data to be subjected to statistics collection.

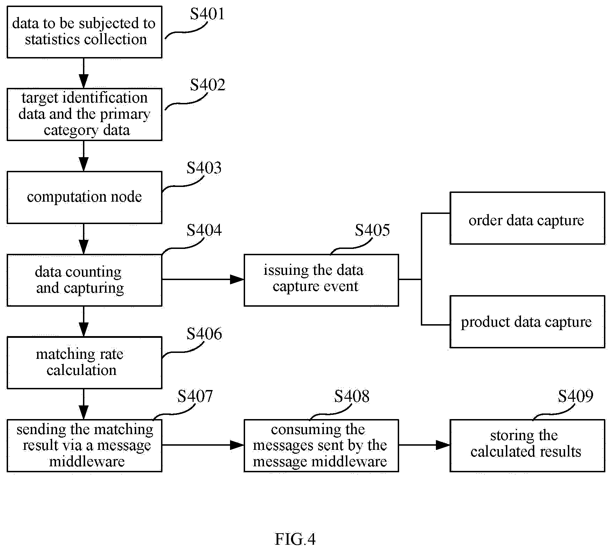

FIG. 4 schematically illustrates a flow diagram for data processing of data to be subjected to statistics collection according to some embodiments of the present disclosure.

Referring to FIG. 4, step S401, data to be subjected to statistics collection is acquired, and fragmentation processing is performed on the data to be subjected to statistics collection to acquire task fragment data.

Step S402, the first primary category data and the target identification data corresponding to the task fragment data are obtained based on the task fragment data, and a data capture event is constructed through the target identification data and the first primary category data.

Step S403, the data capture event is consumed by the computation node, i.e. the data capture event is distributed and broadcasted to the event listener via the event broadcaster in the Spring event listener mechanism.

Step S404, data counting and capturing processing are performed via the event listener based on the data capture events.

Step S405, the data capture event is issued to capture order data and product data in the database, and the captured data is assembled to generate multi-level category data corresponding to different target identification data.

Step S406, the matching rate calculation is performed according to the multi-level category data. According to the business needs, it is necessary to perform statistics on the relevance of the item trading system corresponding to the category dimension, for example, to perform statistics on the percentage of using the intelligent replenishment system for automatic replenishment of such category dimension on a certain date or a certain period of time of a certain item trading system number, i.e., the automatic order matching rate. The following content is mainly based on performing statistics on the automatic order matching rate for analysis.

Step S407, the matching result is sent via the message middleware, and the calculated multi-level category data and the matching rate are sent to a message queue via the message middleware JMQ.

Step S408, messages sent by the message middleware are consumed, and the the matching result sent to the message queue by the message middleware JMQ is consumed.

Step S409, the calculated results are stored, and the calculation results obtained by consumption are store to the Mysql database.

It is noted that although the steps of the method in the present disclosure are depicted in the accompanying drawings in a particular order, it is not required or implied that the steps must be performed in that particular order or that all of the steps shown must be performed to achieve the desired result. Additional or alternatively, certain steps may be omitted, multiple steps may be combined into a single step for execution, and/or a single step may be broken down into multiple steps for execution, etc.

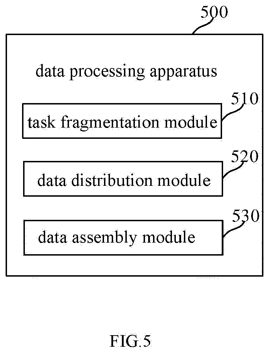

In addition, in this example embodiment, a data processing apparatus is provided. Referring to FIG. 5, the data processing apparatus 500 includes: a task fragmentation module 510, a data distribution module 520 and a data assembly module 530.

The task fragmentation module 510 is configured to acquire data to be subjected to statistics collection, and perform fragmentation processing on the data to be subjected to statistics collection to generate task fragment data.

The data distribution module 520 is configured to distribute the task fragment data to an event listener via a preset event broadcaster.

The data assembly module 530 is configured to query and assemble data according to the task fragment data based on the event listener, to generate multi-level category data corresponding to the data to be subjected to statistics collection.

In an exemplary embodiment of the present disclosure, based on the above solutions, the task fragmentation module 510 is further configured to:
acquire identification data corresponding to the data to be subjected to statistics collection;
perform fragmentation processing on the data to be subjected to statistics collection according to the identification data, to generate the task fragment data corresponding to the data to be subjected to statistics collection.

In an exemplary embodiment of the present disclosure, based on the above solutions, the data processing apparatus 500 further includes a primary category data determination unit configured to:
determine, based on the preset event broadcaster, target identification data corresponding to the task fragment data according to the task fragment data;
determine primary category data corresponding to the target identification data by performing data query based on the target identification data.

In an exemplary embodiment of the present disclosure, based on the above solutions, the data distribution module 520 is further configured to:
construct, based on the preset event broadcaster, a data capture event according to the task fragment data and the primary category data and the target identification data corresponding to the task fragment data;
distribute the data capture event to the event listener to perform asynchronous processing on the data capture event.

In an exemplary embodiment of the present disclosure, based on the above solutions, the data assembly module 530 further includes:
a sub-category data capture unit, configured to query and capture sub-category data in a target database according to the primary category data and the target identification data corresponding to the task fragment data in the data capture event, based on the event listener;
a multi-level category data generation unit, configured to assemble the target identification data, the primary category data and the sub-category data to generate the multi-level category data corresponding to the data to be subjected to statistics collection.

In an exemplary embodiment of the present disclosure, based on the above solutions, the sub-category data capture unit is further configured to:
query and acquire order data and product data of the lowest-level category data corresponding to the primary category data under the target identification data in the target database, according to the primary category data and the target identification data corresponding to the task fragment data in the data capture event;
generate sub-category data by performing level-by-level statistical processing through the lowest-level category data, wherein the sub-category data includes a plurality of levels of category data, and identification processing is performed on different levels of category data.

In an exemplary embodiment of the present disclosure, based on the above solutions, the data processing apparatus 500 further includes a storage unit configured to:
store multi-level category data subjected to flattening processing in a target database.

The specific details of the modules of the data processing apparatus in the foregoing have been described in detail in the corresponding data processing method and are therefore not repeated here.

It should be noted that although a number of modules or units of the data processing apparatus are mentioned in the detailed description above, this division is not mandatory. Indeed, according to embodiments of the present disclosure, the features and functions of two or more modules or units described above may be specified in a single module or unit. Conversely, the features and functions of one module or unit described above may be further divided to be specified by a plurality of modules or units.

In an exemplary embodiment of the present disclosure, there is further provided an electronic device capable of implementing the above data processing method.

Those skilled in the art may understand that various aspects of the present disclosure may be implemented as a system, method, or program product. Therefore, various aspects of the present disclosure may be embodied in the following forms: a complete hardware implementation, a complete software implementation (including firmware, microcode, etc.), or a combination of hardware and software, which may be collectively referred to herein "circuit", "module", or "system".

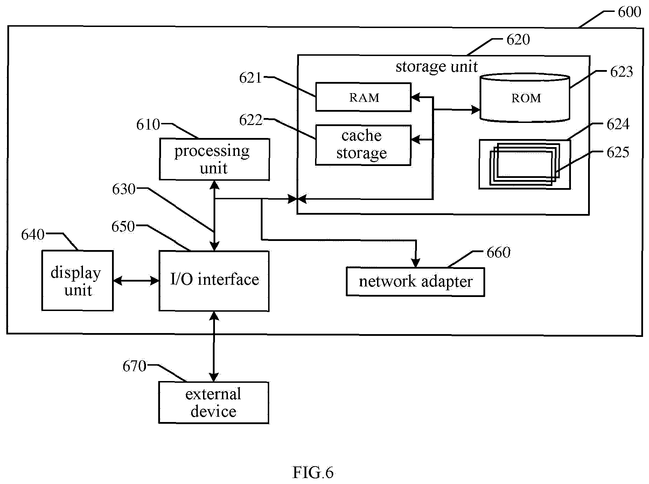

The electronic device 600 according to this embodiment of the present disclosure is described below with reference to FIG. 6. The electronic device 600 shown in FIG. 6 is merely an example, and should not impose any limitation on the functions and scope of use of the embodiment of the present disclosure.

As shown in FIG. 6, the electronic device 600 is expressed in the form of a general-purpose computing device. The components of the electronic device 600 may include, but are not limited to, at least one processing unit 610, at least one storage unit 620, a bus 630 connecting different system components (including the storage unit 620 and the processing unit 610), and a display unit 640.

In the example above, the storage unit stores program codes, and the program codes may be executed by the processing unit 610, so that the processing unit 610 executes various steps of the exemplary embodiments according to the present disclosure described in the above-mentioned "exemplary method" in the specification. For example, the processing unit 610 may perform the steps shown in FIG. 1, step S210, acquiring data to be subjected to statistics collection, and performing fragmentation processing on the data to be subjected to statistics collection to generate task fragment data; step S220, distributing the task fragment data to an event listener via a preset event broadcaster; and step S230, querying and assembling data according to the task fragment data based on the event listener, to generate multi-level category data corresponding to the data to be subjected to statistics collection.

The storage unit 620 may include a readable medium in the form of a volatile storage unit, such as a random access storage unit (RAM) 621 and/or a cache storage unit 622, and may further include a read-only storage unit (ROM) 623.

The storage unit 620 may further include a program/utility tool 624 having a set of (at least one) program modules 625. Such program modules 625 include, but are not limited to, an operating system, one or more application programs, other program modules, and program data. Each or some combination of these examples may include an implementation of a network environment.

The bus 630 may be one or more of several types representing bus structures, including a storage unit bus or a storage unit controller, a peripheral bus, a graphics acceleration port, a processing unit, or a local bus that uses any bus structure in a variety of bus structures.

The electronic device 600 may also communicate with one or more external devices 670 (such as a keyboard, pointing device, Bluetooth device, etc.), may also communicate with one or more devices that enable a user to interact with the electronic device 600, and/or with any device (e.g., router, modem, etc.) that enables the electronic device 600 to communicate with one or more other computing devices. This communication may be performed through an input/output (I/O) interface 650. Moreover, the electronic device 600 may also communicate with one or more networks (such as a local area network (LAN), a wide area network (WAN), and/or a public network, such as the Internet) through the network adapter 660. As shown, the network adapter 660 communicates with other modules of the electronic device 600 through the bus 630. It should be understood that although not shown in the figure, other hardware and/or software modules may be used in conjunction with the electronic device 600, including but not limited to: microcode, device drivers, redundant processing units, external disk drive arrays, RAID systems, tape drives, data backup storage systems and the like.

Through the description of the above embodiments, those skilled in the art will readily understand that the exemplary embodiments described here may be implemented by software or by software in combination with necessary hardware. Therefore, the technical solution according to the embodiments of the present disclosure may be embodied in a form of software product, which may be stored in a non-volatile storage medium (which may be a CD-ROM, a USB disk, a mobile hard disk, etc.) or on a network, including a number of instructions to cause a computing device (which may be a personal computer, a server, a terminal apparatus, or a network device, etc.) to perform the methods according to embodiments in the present disclosure.

In an exemplary embodiment of the present disclosure, there is also provided a computer-readable storage medium on which a program product capable of implementing the above-mentioned method of the present specification is stored. In some possible implementation manners, aspects of the present disclosure may also be implemented in the form of a program product, which includes program code. When the program product runs on a terminal device, the program code is used to cause the terminal device perform the steps according to various exemplary embodiments of the present disclosure described in the above-mentioned "exemplary method" section of this specification.

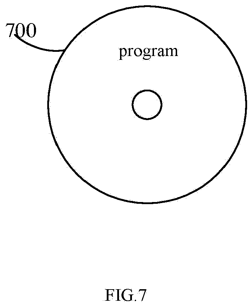

Referring to FIG. 7, a program product 700 for implementing the above data processing method according to an embodiment of the present disclosure is described. The program product 700 can use a portable compact disc read-only memory (CD-ROM) and include the program code, which may run on a terminal device, for example, on a personal computer. However, the program product of the present disclosure is not limited thereto. In this document, the readable storage medium may be tangible medium containing or storing programs, and the program may be used by or in combination with an instruction execution system, an apparatus, or a device.

The program product may employ any combination of one or more readable media. The readable medium may be a readable signal medium or a readable storage medium. The readable storage medium may be, for example, but is not limited to, an electronic, magnetic, optical, electromagnetic, infrared, or semiconductor system, apparatus, or device, or any combination thereof. More specific examples (non-exhaustive list) of readable storage media include: electrical connection with one or more wires, portable disk, hard disk, random access memory (RAM), read-only memory (ROM), erasable programmable read-only memory (EPROM or flash memory), optical fiber, portable compact disc read-only memory (CD-ROM), optical storage device, magnetic storage device, or any suitable combination of the foregoing.

The computer-readable signal medium may include a data signal in baseband or propagated as a part of a carrier wave, which carries readable program codes. Such a propagated data signal may take many forms, including but not limited to electromagnetic signals, optical signals, or any suitable combination of the foregoing. The readable signal medium may also be any readable medium other than a readable storage medium, and the readable medium may send, propagate, or transmit a program for use by or in combination with an instruction execution system, apparatus, or device.

The program code contained on the readable medium may be transmitted using any appropriate medium, including but not limited to wireless, wired, optical cable, RF, etc., or any suitable combination of the foregoing.

The program code for performing the operations of the present disclosure may be written in any combination of one or more programming languages, which include object-oriented programming languages, such as Java, C++, etc. and further include conventional procedural programming language, such as "C" or a similar programming language. The program code may be executed entirely or partly on the user computing device, may be executed as an independent software package, may be executed partly on the user computing device and partly on the remote computing device, or may be executed entirely on the remote computing device or server. In the case of involving remote computing devices, the remote computing devices may be connected to the user computing device via any kind of network, such as a local area network (LAN) or a wide area network (WAN), or it may be connected to external computing devices, for example, connected to external computing devices via the Internet by use of an Internet service provider.

In addition, the above-mentioned drawings are merely a schematic description of processes included in the method of the exemplary embodiment of the present disclosure, and are not intended to limit the purpose. It is easy to understand that the processes shown in the above drawings do not indicate or limit the chronological order of these processes. In addition, it is also easy to understand that these processes may be performed synchronously or asynchronously in a plurality of modules, for example.

With the above description of embodiments, it is readily understood by those skilled in the art that the example embodiments described herein can be implemented by means of software or by means of software combined with the necessary hardware. Thus, a technical solution according to an embodiment of the present disclosure may be embodied in the form of a software product, which may be stored on a non-volatile storage medium (which may be a CD-ROM, a USB stick, a removable hard disk, etc.) or on a network, including a number of instructions to enable a computing device (which may be a personal computer, a server, a touch terminal, or a network device, etc.) to perform a method according to an embodiment of the present disclosure.

Other embodiments of the present disclosure will be apparent to those skilled in the art after consideration of the specification and practice of the present disclosure disclosed here. The present application is intended to cover any variations, uses, or adaptations of the present disclosure, which are in accordance with the general principles of the disclosure and include common general knowledge or common technical means in the art that are not disclosed in the present disclosure. The specification and embodiments are deemed to be exemplary only and the true scope and spirit of this disclosure is indicated by the claims.

It is to be understood that the present disclosure is not limited to the precise construction already described above and illustrated in the accompanying drawings, and various modifications and changes may be made without departing from its scope. The scope of the present disclosure is limited only by the appended claims.

## Claims

1. A data processing method, comprising:
acquiring data to be subjected to statistics collection, and performing fragmentation processing on the data to be subjected to statistics collection to generate task fragment data;
distributing the task fragment data to an event listener via a preset event broadcaster; and
querying and assembling data according to the task fragment data based on the event listener, to generate multi-level category data corresponding to the data to be subjected to statistics collection.

2. The data processing method according to claim 1, wherein said performing fragmentation processing on the data to be subjected to statistics collection to generate task fragment data comprises:
acquiring identification data corresponding to the data to be subjected to statistics collection;
performing fragmentation processing on the data to be subjected to statistics collection according to the identification data, to generate the task fragment data corresponding to the data to be subjected to statistics collection.

3. The data processing method according to claim 2, wherein, before distributing the task fragment data to an event listener via a preset event broadcaster, the method further comprises:
determining, based on the preset event broadcaster, target identification data corresponding to the task fragment data according to the task fragment data;
determining primary category data corresponding to the target identification data by performing data query based on the target identification data.

4. The data processing method according to claim 3, wherein said distributing the task fragment data to an event listener via a preset event broadcaster comprises:
constructing, based on the preset event broadcaster, a data capture event according to the task fragment data and the primary category data and the target identification data corresponding to the task fragment data;
distributing the data capture event to the event listener to perform asynchronous processing on the data capture event.

5. The data processing method according to claim 4, wherein said querying and assembling data according to the task fragment data based on the event listener, to generate multi-level category data corresponding to the data to be subjected to statistics collection comprises:
querying and capturing sub-category data in a target database according to the primary category data and the target identification data corresponding to the task fragment data in the data capture event, based on the event listener;
assembling the target identification data, the primary category data and the sub-category data to generate the multi-level category data corresponding to the data to be subjected to statistics collection.

6. The data processing method according to claim 5, wherein said querying and capturing sub-category data in a target database according to the primary category data and the target identification data corresponding to the task fragment data in the data capture event comprises:
querying and acquiring order data and product data of the lowest-level category data corresponding to the primary category data under the target identification data in the target database, according to the primary category data and the target identification data corresponding to the task fragment data in the data capture event;
generating sub-category data by performing level-by-level statistical processing through the lowest-level category data, wherein the sub-category data comprises a plurality of levels of category data, and identification processing is performed on different levels of category data.

7. The data processing method according to claim 1, wherein, after querying and assembling data according to the task fragment data to generate multi-level category data corresponding to the data to be subjected to statistics collection, the method further comprises:
storing multi-level category data subjected to flattening processing in a target database.

8. A data processing apparatus, comprising:
a task fragmentation module, configured to acquire data to be subjected to statistics collection, and perform fragmentation processing on the data to be subjected to statistics collection to generate task fragment data;
a data distribution module, configured to distribute the task fragment data to an event listener via a preset event broadcaster; and
a data assembly module, configured to query and assemble data according to the task fragment data based on the event listener, to generate multi-level category data corresponding to the data to be subjected to statistics collection.

9. An electronic device, comprising:
a processor; and
a memory, having computer readable instructions stored thereon, wherein the computer readable instructions implements the data processing method according to any one of claims 1 to 7 when executed by the processor.

10. A computer readable storage medium, having computer programs stored thereon, wherein the computer program implements the data processing method according to any one of claims 1 to 7 when executed by the processor.
